# FASCICULE DE BREVET EUROPEEN

(11) **EP 0 913 613 B1**
(45) Date de publication et mention de la délivrance du brevet: **06.08.2003**
(21) Numéro de dépôt: 98470025.2
(22) Date de dépôt: 22.10.1998
(51) Int. Cl.: F16L 21/06

(54) **Manchon pour élément de tuyauterie**
Manschette für ein Rohrelement
Collar for a pipe member

(30) Priorité: 30.10.1997 FR 9713655
(43) Date de publication de la demande: 06.05.1999
(73) Titulaire: SAINT-GOBAIN PAM, 54000 Nancy (FR)
(72) Inventeur: Vitel, Jean-Pierre, 54470 Thiaucourt-Regnieville (FR); Barbe, Pierre, 54200 Bicqueley (FR); Gaillot, Jean-Paul, 54000 Nancy (FR); Coche, Bernard, 54700 Montauville (FR)
(74) Mandataire: Puit, Thierry

(56) Documents cités:
- DE-A- 1 475 874
- FR-A- 2 237 111
- US-A- 2 227 551
- US-A- 3 479 066

## Description

La présente invention concerne un manchon pour élément de tuyauterie destiné à l'assemblage bout à bout d'éléments de tuyauterie, du type comportant une garniture tubulaire d'étanchéité en matière élastomère, une enveloppe extérieure comportant une virole fendue longitudinalement enveloppant au moins partiellement la garniture et des moyens de serrage de l'enveloppe pour rapprocher les extrémités latérales de la virole et comprimer la garniture d'étanchéité.

Un tel manchon est décrit par exemple dans le document DE-A-1475874, ou dans la demande de brevet français déposée sous le numéro 96-01232 le 1^{er} février 1996 au nom de la Demanderesse.

Cette demande décrit un dispositif d'assemblage bout à bout d'éléments de tuyauterie formé par un tel manchon.

Bien que le manchon décrit dans cette demande fonctionne de manière satisfaisante, sa pose est parfois délicate puisqu'elle nécessite la mise en place d'une sangle entourant complètement le manchon.

L'invention a pour but de fournir une alternative au manchon décrit dans cette demande, ne nécessitant pas de sangle pour le serrage de l'enveloppe extérieure et qui puisse être engagé sur des éléments de tuyauterie dépourvus de chanfrein d'extrémité.

A cet effet, l'invention a pour objet un manchon pour élément de tuyauterie destiné à l'assemblage bout à bout d'éléments de tuyauterie, du type précité, dans lequel les moyens de serrage comportent deux brides rapportées, solidaires chacune d'une extrémité latérale de la virole, et des moyens de traction des deux brides l'une vers l'autre.

Suivant des modes particuliers de réalisation, le manchon comporte une ou plusieurs des caractéristiques suivantes :
- les deux brides comportent au moins une paire de perçages coaxiaux et les moyens de traction comportent au moins un boulon engagé dans la ou chaque paire de perçages ;
- les deux brides comportent des surfaces d'appui complémentaires adaptées pour coopérer et limiter le rapprochement des extrémités de la virole ;
- il comporte une cale amovible interposée entre les deux brides, laquelle cale définit un intervalle déterminé entre les extrémités de la virole adapté pour la mise en place du manchon sur le ou chaque élément de tuyauterie ;
- la cale comporte un profil d'entraînement adapté pour coopérer avec le profil ménagé sur le ou chaque boulon et constitue ainsi un outil de serrage du ou de chaque boulon ;
- les deux brides comportent suivant leur épaisseur des échancrures en regard, délimitant une lucarne d'accès à la garniture ;
- la virole comporte une bande métallique tubulaire, ouverte suivant une génératrice, laquelle bande comporte, à ses extrémités en regard, des lumières pour la fixation des brides et les brides comportent des pattes engagées dans lesdites lumières, lesquelles pattes assurent la solidarisation des brides aux extrémités de la virole ;
- la garniture tubulaire comporte, ménagés dans sa surface extérieure sur laquelle s'appuie la virole, des évidements de réception des pattes de liaison des brides aux extrémités de la virole ;
- la virole ouverte comporte à ses extrémités des échancrures en regard, délimitant une lucarne de visualisation de la garniture ;
- chaque bride comporte latéralement deux piliers solidaires de la virole et un pontet écarté de la virole reliant les deux piliers, chaque bride définissant une poighée de préhension du manchon ;
- les deux brides comportent suivant leurs faces en regard des profils complémentaires chevauchant les extrémités de la virole et facilitant l'accostage des deux brides ;
- la garniture tubulaire comporte, extérieurement de part et d'autre, des collets annulaires délimitant entre eux un siège annulaire de réception de la virole ;
- la garniture comporte sur sa face interne un ensemble de bourrelets annulaires d'étanchéité adaptés pour venir s'appliquer suivant leur ligne de crête sur le ou chaque élément de tuyauterie ;
- la garniture tubulaire comporte sur sa face interne une saillie de positionnement formant butée adaptée pour coopérer avec le ou chaque élément de tuyauterie ;
- la garniture est généralement réalisée dans un matériau opaque et comporte, dans sa zone médiane, au moins une lucarne réalisée dans un matériau transparent assurant un accès visuel au ou à chaque élément de tuyauterie.

L'invention sera mieux comprise à la lecture de la description qui va suivre, donnée uniquement à titre d'exemple, et faite en se référant aux dessins, sur lesquels
- la figure 1 est une vue en perspective d'un tronçon de canalisation dont deux éléments de tuyauteries successifs sont assemblés au moyen d'un premier mode de réalisation du manchon selon l'invention ;
- la figure 2 est une vue partielle en coupe transversale du manchon, dans sa zone comportant les moyens de serrage de l'enveloppe, la garniture d'étanchéité n'étant pas représentée ;
- la figure 3 est une vue en perspective de la virole mise en oeuvre dans le manchon selon l'invention ;
- la figure 4 est une vue en perspective d'une bride du manchon selon l'invention ;
- la figure 5 est une vue partielle en coupe longitudinale d'un premier mode de réalisation'de la garniture d'étanchéité du manchon selon l'invention ;
- la figure 6 est une vue en perspective du manchon de la figure 1, représenté avant montage et serrage de l'enveloppe et comportant une cale d'écartement des brides ;
- la figure 7 est une vue en perspective de la cale de la figure 6 ;
- la figure 8 est une vue partielle en coupe longitudinale d'un second mode de réalisation de la garniture d'étanchéité ; et
- les figures 9 et 10 sont des vues en perspective de deux tuyaux accouplés par l'intermédiaire de deux variantes de réalisation du manchon selon l'invention.

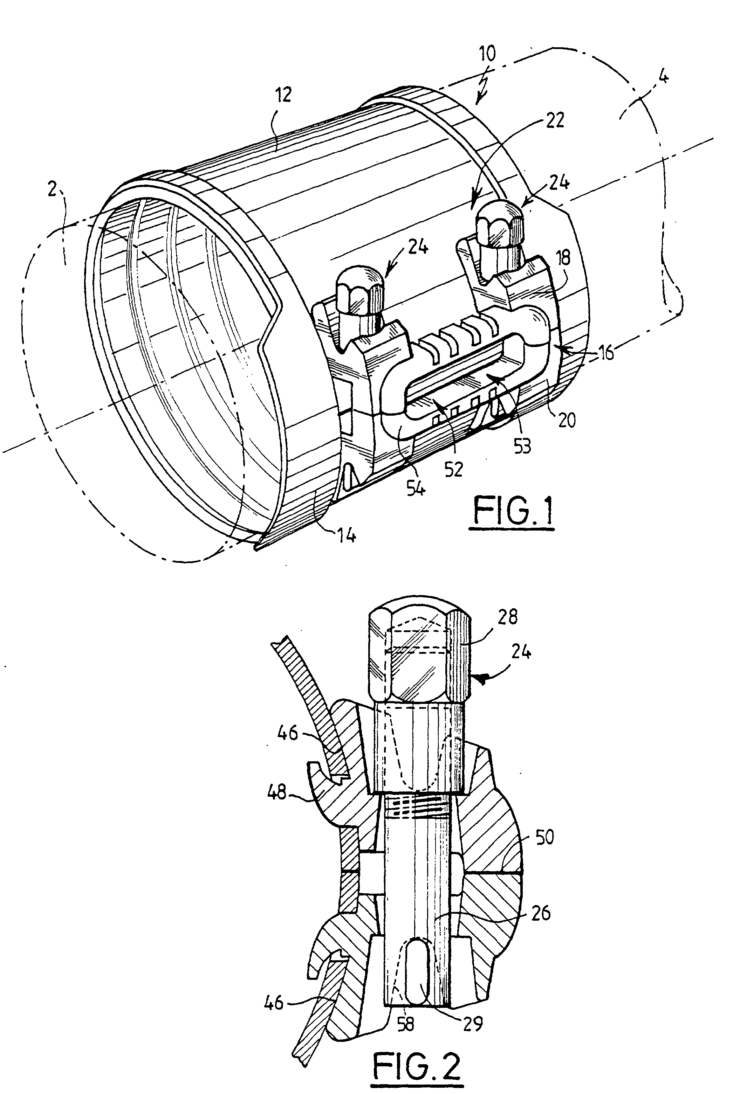

Le manchon pour élément de tuyauterie représenté sur les figures 1 et 2 est destiné, soit à l'assemblage bout à bout d'éléments de tuyauterie, soit à la réparation d'un élément de tuyauterie défectueux.

Le manchon est destiné à être utilisé dans des installations d'assainissement. Son diamètre intérieur est par exemple de 171,5 mm et sa longueur de 175 mm.

Sur la figure 1, on a représenté un tronçon de canalisation formé de deux éléments de tuyauterie ou tuyaux 2, 4, réunis bout à bout par un manchon 10 suivant l'invention. Ce manchon comporte une enveloppe extérieure formée par une virole 12 tubulaire fendue longitudinalement montée sur les extrémités juxtaposées des tuyaux 2, 4 avec interposition d'une garniture d'étanchéité tubulaire à contour fermé ou manchette 14 en matière élastomère.

Le manchon comporte en outre des moyens 16 de serrage de l'enveloppe pour rapprocher les deux extrémités de la virole et comprimer la garniture d'étanchéité.

Ces moyens de serrage 16 comportent deux brides identiques rapportées 18, 20, chacune solidaire d'une extrémité de la virole. Les moyens de serrage 16 comportent en outre des moyens 22 de traction des deux brides l'une vers l'autre.

Ces moyens de traction 22 comportent, dans le mode de réalisation représenté, deux boulons 24 formés chacun d'une vis 26 et d'un écrou à six pans 28.

Ces boulons sont engagés dans des paires de perçages coaxiaux ménagés dans les brides 18, 20.

La vis 26 des moyens de traction présente une tête d'extrémité 29 plane s'étendant perpendiculairement à la tige de vis. Ainsi, la tige de vis prolongée par la tête 29 a généralement la forme d'un T. La tige de vis comporte un premier tronçon lisse prolongé à son extrémité opposée à la tête 29 par un tronçon fileté destiné à recevoir l'écrou 28. Cet écrou est par exemple un écrou borgne.

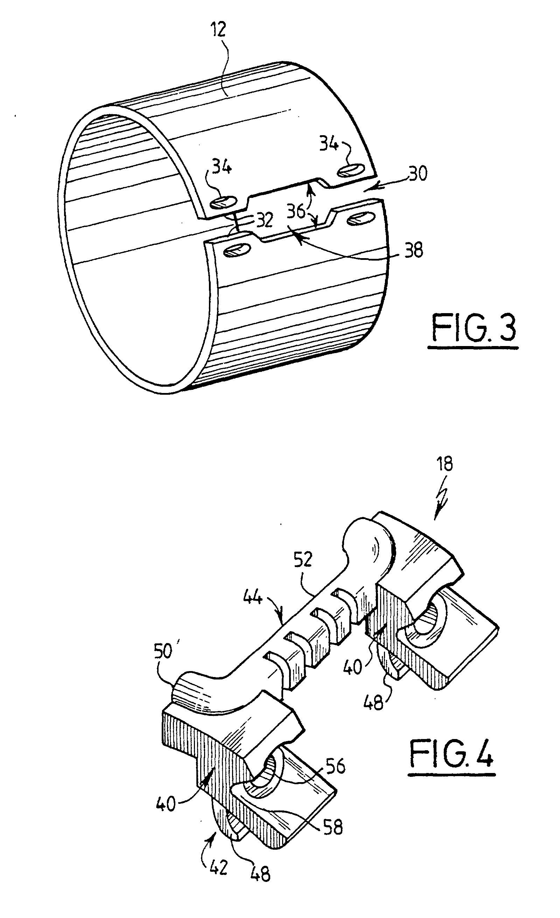

Comme représenté sur la figure 3, la virole 12 formant l'enveloppe est formée d'un manchon tubulaire, de section circulaire dans l'exemple considéré. La virole est ouverte suivant une génératrice s'étendant suivant toute sa longueur. Ainsi, de part et d'autre de la fente 30 ainsi définie, la virole comporte deux bords d'extrémité 32 en regard. La virole est réalisée en métal, notamment en fonte.

Elle comporte, au voisinage de chaque bord 32, deux lumières oblongues 34 de fixation des brides dont l'axe s'étend suivant une génératrice de la virole. En outre, chaque bord 32 présente avantageusement, dans sa partie médiane, une échancrure 36 s'étendant entre les lumières oblongues 34. Les deux échancrures 36 sont disposées en regard l'une de l'autre et délimitent une lucarne 38 sensiblement rectangulaire.

Sur la figure 4 est représentée en perspective l'une, 18, des brides solidarisées aux extrémités de l'enveloppe, afin d'assurer son serrage.

Cette bride est réalisée d'une seule pièce en métal, notamment en fonte. Elle comporte latéralement de part et d'autre deux piliers 40 comportant, sur leur face inférieure des moyens 42 de solidarisation aux extrémités de l'enveloppe 12. Les piliers 40 sont reliés l'un à l'autre dans leur partie supérieure par un pontet 44.

Comme représenté sur la figure 2, la face inférieure, notée 46, des piliers 40 est délimitée par une surface cylindrique 46 complémentaire à la surface cylindrique extérieure de la virole 12.

Les moyens de solidarisation 42 comportent des pattes recourbées 48 venues de matière avec les piliers sensiblement au centre de la surface inférieure 46. Ces pattes 48 sont destinées à être engagées dans les lumières 34 de la virole 12. Elles sont recourbées vers l'arrière, de sorte qu'après montage, les pattes des deux brides s'écartent l'une de l'autre vers leur extrémité libre. Les pattes 48 sont, au moins à leur racine, de section oblongue complémentaire à la forme des lumières 34, afin d'éviter toute possibilité de vibrations.

Le pontet 44 est décalé par rapport à l'axe des piliers 40 et s'étend partiellement en porte-à-faux par rapport aux piliers 40. La partie avant en porte-à-faux présente une face plane d'appui 50 destinée à permettre aux deux brides en regard de venir en contact l'une avec l'autre.

Les surfaces 50 en regard comportent chacune dans leur partie médiane une échancrure 52. Ces échancrures en regard délimitent une lucarne 53 d'accès visuel vers l'intérieur du manchon. L'échancrure 52 est bordée, sur la surface externe de chaque bride, par un bourrelet périphérique 54.

Les piliers 40 comportent des perçages transversaux 56 débouchant, à l'avant, au-dessous de la face d'appui 50 et, à l'arrière, sensiblement au centre de la face arrière du pilier. La face arrière de chaque pilier est creusée d'un canal 58 dont l'axe s'étend parallèlement au pontet 44 et perpendiculairement à la direction des pattes recourbées 48. Ces canaux sont destinés à recevoir les têtes 29 des vis de serrage.

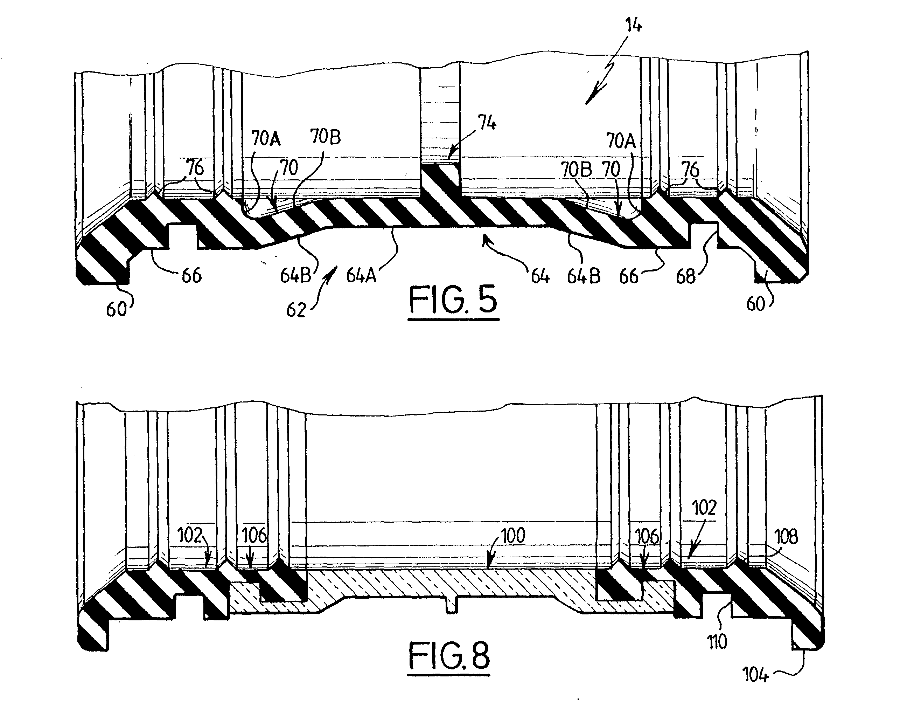

Sur la figure 5 est représenté en coupe le garnissage 14 interposé entre l'enveloppe 12 et les éléments de tuyauterie à assembler. Cette garniture se présente sous la forme d'un manchon symétrique réalisé en élastomère.

Le manchon est bordé extérieurement, à ses deux extrémités, par des collets extérieurs 60 délimitant entre eux un siège annulaire creux 62 de réception de la virole 12. La surface cylindrique servant d'appui à la virole 12 est creusée, dans sa partie médiane, par une cuvette périphérique 64 à fond plat 64A et à rives biseautées 64B. Cette cuvette 64 est bordée de part et d'autre de tronçons annulaires plans 66 contigus aux collets 60. Ces tronçons plans 66 comportent des gorges périphériques 68 destinées à la réception des pattes de solidarisation 48 des brides.

Sur sa face interne, la garniture 14 comporte, en regard des rives biseautées 64B de la cuvette intermédiaire, des gorges périphériques 70 délimitées par une face inclinée 70B s'étendant sensiblement parallèlement aux rives biseautées 64 et s'achevant par un tronçon en arc-de-cercle 70A.

Aussi, dans sa partie médiane, la garniture 14 comporte une paroi annulaire d'épaisseur sensiblement constante dont le tronçon central est déporté vers l'axe de la garniture.

Suivant son axe de symétrie, la garniture 14 comporte une saillie périphérie interne 74 formant butée destinée à assurer le positionnement du manchon entre les deux éléments de tuyauterie à assembler. La saillie 74 est avantageusement de section carrée.

Par ailleurs, à l'extérieur des gorges 70, la surface latérale intérieure cylindrique de la garniture 14 comporte un ensemble de bourrelets périphériques d'étanchéité 76. Ces derniers sont formés, par exemple, par des nervures de section triangulaire dont la ligne de crête est adaptée pour être appliquée sur la paroi externe des éléments de tuyauterie.

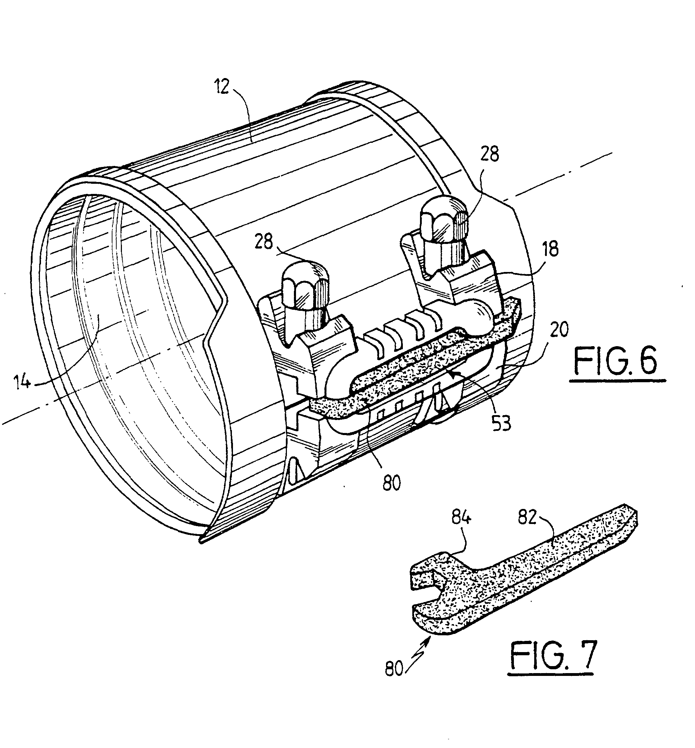

Sur la figure 6 est représenté le manchon selon l'invention dans son état de livraison, avant mise en place sur un élément de tuyauterie. Dans cette configuration, on remarque une cale 80 interposée entre les deux mors 18, 20 et plus particulièrement entre leurs surfaces d'appui 50.

La cale 80, représentée seule sur la figure 7, présente une forme allongée et est d'épaisseur constante. Elle définit un écartement déterminé des brides correspondant à un serrage de la garniture adapté pour permettre son montage sur un élément de tuyauterie, même si celui-ci est dépourvu de chanfrein d'extrémité.

Dans le mode de réalisation décrit, la cale 80 comporte une barre 82 prolongée à une extrémité par une mâchoire 84 définissant un profil d'entraînement adapté pour coopérer avec le profil extérieur des écrous 28. Ainsi, la cale 80, constituée d'un élément allongé portant un tel profil d'entraînement à son extrémité, constitue une clé adaptée pour assurer le serrage des écrous 28. Elle est par exemple réalisée en tôle d'épaisseur de 10 mm. Elle peut également être réalisée en fonte. Avantageusement, sur l'essentiel de sa surface, la cale 80 formant clé comporte deux platines en plastique (non représentées) rapportées définissant une poignée de préhension de la clé.

L'assemblage du manchon s'effectue de la manière suivante. La garniture 14, réalisée en élastomère, est introduite par déformation élastique à l'intérieur de la virole 12. Les deux brides 18, 20 sont alors disposées en regard aux extrémités de la virole 12. A cet effet, les pattes recourbées 48 sont engagées dans les lumières oblongues 34, comme représenté sur la figure 2. Les vis 26 sont ensuite introduites, dans le même sens, dans les paires de perçages alignés 56 ménagés dans les brides. Les têtes 29 des vis étant reçues dans les canaux 58, les écrous 28 sont vissés aux extrémités filetées des vis. La cale formant clé 80 est alors introduite entre les deux mors, la mâchoire 84 de la clé étant engagée autour d'une des tiges de vis, la barre formant le corps de clé s'étendant suivant la longueur des brides.

Les écrous 28 sont alors serrés manuellement afin d'assurer une retenue de la cale 80 entre les deux mors.

Ainsi maintenue entre les deux mors, la cale définit un serrage optimal de la virole, correspondant à une compression de la garniture permettant une introduction d'un ou de deux éléments de tuyauterie à l'intérieur du manchon sans effort d'emmanchement.

Afin d'assurer l'accouplement de deux éléments de tuyauterie, on engage les deux extrémités de ceux-ci, de part et d'autre du manchon, jusqu'à ce qu'ils viennent en butée sur la saillie périphérique 74. Les écrous 28 sont ensuite desserrés légèrement afin de permettre le retrait de la cale 80 formant clé. Cette dernière est alors utilisée afin de procéder au serrage des écrous 28, les vis étant maintenues fixes en rotation par rapport aux brides par l'engagement des têtes 29 dans les canaux 58. Le serrage des écrous est effectué à l'aide de la clé 80 jusqu'à ce que les surfaces 50 viennent en appui l'une sur l'autre limitant alors le rapprochement des extrémités de la virole.

L'épaisseur de la cale 80 est déterminée de sorte que, lorsque les surfaces 50 viennent en contact l'une avec l'autre, la compression de la garniture d'étanchéité soit optimale afin d'assurer un raccordement fiable des éléments de tuyauterie.

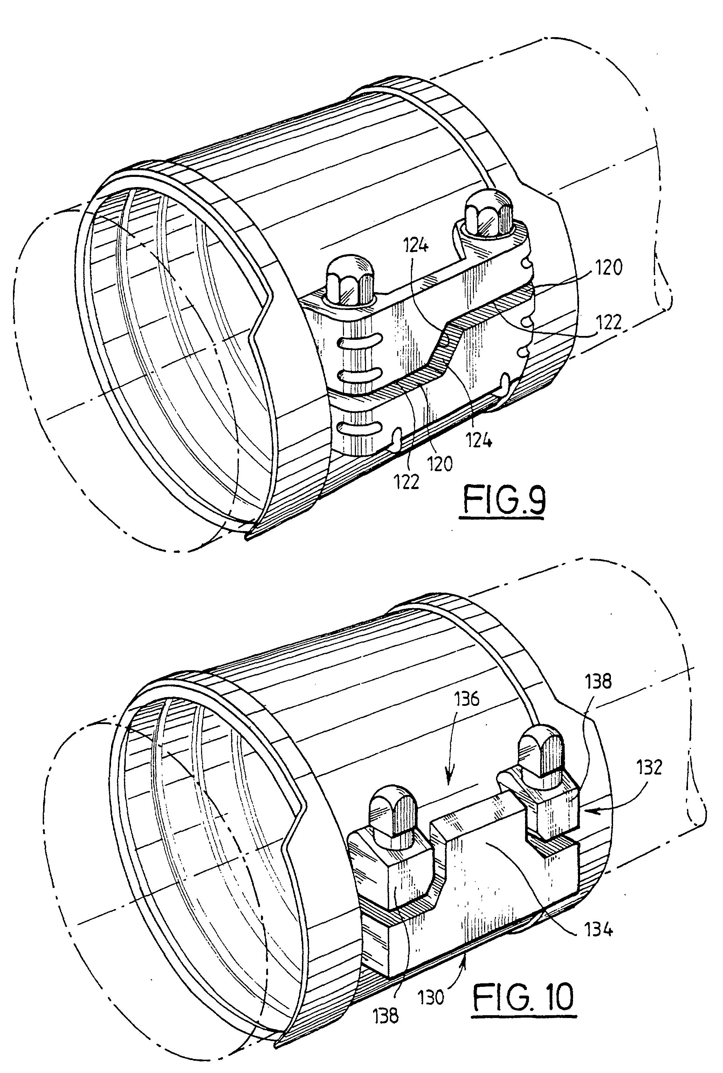

Sur la figure 8 est représentée une variante de réalisation d'une garniture destinée à être utilisée dans un manchon selon l'invention.

Cette garniture diffère en ce qu'elle comporte un tronçon intermédiaire 100 réalisé en matière plastique transparente. Ce tronçon intermédiaire 100 est relié de part et d'autre à deux tronçons d'extrémité 102 symétriques réalisés en élastomère. Ces derniers comportent, à l'extérieur, des collets 104 analogues aux collets 60 délimitant un siège de réception pour la virole 12. Les tronçons d'extrémité 102 et le tronçon intermédiaire 100 sont surmoulés et sont reliés par des profils complémentaires en saillie et en creux désignés par la référence générale 106. Comme précédemment, les tronçons d'extrémité 102 comportent sur leur face intérieure des bourrelets périphériques d'étanchéité 108. Ils comportent en outre sur leur face externe des gorges 110 de réception des pattes de solidarisation 48.

Le manchon équipé d'une telle garniture, dont le tronçon médian est transparent, permet un positionnement visuel correct du manchon dans la zone d'accouplement bout à bout des deux éléments de tuyauterie. En effet; les lucarnes 38, 53 délimitées par les échancrures superposées 36 et 52, ménagées respectivement dans la virole et dans les brides permettent un accès visuel jusqu'aux extrémités des tuyaux engagées dans le manchon.

Dans ce cas, la saillie 74, ménagée sur la face interne de la garniture est facultative, le positionnement pouvant être effectué sous le contrôle visuel de l'opérateur.

Par ailleurs, en variante non représentée, la virole 12 comporte, dans sa zone médiane, un ensemble de lumières permettant un accès visuel des extrémités des éléments de tuyauterie au travers du tronçon transparent de la garniture.

Sur les figures 9 et 10 sont représentées deux variantes de réalisation de brides pouvant être utilisées pour le manchon selon l'invention.

Sur ces figures, au moins l'une des brides comporte une partie s'étendant au-delà des bords 32 en regard de la virole, assurant ainsi un guidage lors de l'accostage des deux extrémités de la virole.

Dans le mode de réalisation de la figure 9, les deux brides sont identiques et présentent des formes complémentaires. Ainsi, les faces en regard des brides ont une forme générale de S. Elles comportent chacune deux faces parallèles en regard 120, 122 s'étendant parallèlement à la fente longitudinale 30 ménagée dans la virole 12. Les deux faces parallèles 120, 122 d'une même bride sont reliées par un pan incliné 124.

Dans le mode de réalisation de la figure 10, les deux brides 130, 132 sont différentes. La bride 130 comporte une languette 134 destinée à être reçue dans un passage 136 ménagé entre les deux piliers 138 de la bride 132 portée par l'autre extrémité de la virole 12.

Dans les modes de réalisation des figures 1 et 9, on comprend que les pontets 44 formant la partie courante des brides sont écartés de la virole 12. Des dégagements sont ainsi ménagés entre le pontet et la virole pour le passage des doigts d'une main afin d'empoigner le manchon, les deux brides définissant ainsi une poignée de préhension du manchon.

En variante non représentée, la cale 80 peut comporter une poignée de portage du manchon.

Suivant encore une autre variante, la zone transparente ménagée dans la garniture peut être limitée à une lucarne s'étendant localement sur la périphérie de la garniture.

On comprend qu'un tel manchon peut, lorsqu'il ne comporte pas de saillie interne de positionnement des éléments de tuyauterie, être engagé complètement sur un même élément de tuyauterie extérieurement lisse. En particulier, deux manchons de ce type peuvent être mis en oeuvre pour procéder à la remise en état d'une canalisation comportant une fuite dans sa partie courante. Pour ce faire, on tronçonne la canalisation de part et d'autre de la zone où se situe la fuite afin d'extraire le tronçon défectueux. On remplace le tronçon défectueux par un tronçon de tuyau neuf de même longueur.

Afin d'assurer la liaison du nouveau tronçon avec les deux parties restantes de la canalisation initiale, on introduit, sur chaque extrémité de la canalisation bordant la zone de laquelle a été extrait le tronçon défectueux, un manchon selon l'invention dépourvu de saillie interne de positionnement. En l'absence d'une telle saillie, les deux manchons peuvent être complètement emmanchés sur les deux parties de canalisation restante.

On met ensuite en place le tronçon de tuyau neuf dans le prolongement des deux parties de canalisation initiale.

Afin d'assurer la liaison et l'étanchéité du tronçon neuf avec les deux parties de canalisation initiale, les manchons sont déplacés jusqu'à chevaucher le tronçon neuf à chacune de ses extrémités. Lorsque les deux manchons sont à cheval chacun entre une extrémité du tronçon neuf et une partie de la canalisation initiale, ceux-ci sont serrés afin d'assurer un accouplement définitif.

De manière générale, un tel manchon permet d'assurer un assemblage d'éléments de tuyauterie en utilisant pratiquement aucun outillage extérieur.

En outre, il ne nécessite pas de main d'oeuvre spécialisée pour son montage.

## Revendications

1. Manchon (10) pour élément de tuyauterie destiné à l'assemblage bout à bout d'éléments (2, 4) de tuyauterie, du type comportant une garniture tubulaire d'étanchéité (14) en matière élastomère, une enveloppe extérieure comportant une virole (12) fendue longitudinalement enveloppant au moins partiellement la garniture (14) et des moyens (16) de serrage de l'enveloppe pour rapprocher les extrémités latérales de la virole (12) et comprimer la garniture d'étanchéité (14), dans lequel les moyens de serrage (16) comportent deux brides (18, 20 ; 130, 132) rapportées, solidaires chacune d'une extrémité latérale de la virole (12), et des moyens (22) de traction des deux brides (18, 20 ; 130, 132) l'une vers l'autre.

2. Manchon (10) selon la revendication 1, **caractérisé en ce que** les deux brides (16, 18) comportent au moins une paire de perçages (56) coaxiaux et **en ce que** les moyens de traction (22) comportent au moins un boulon (24) engagé dans la ou chaque paire de perçages (56).

3. Manchon (10) selon la revendication 1 ou 2, **caractérisé en ce que** les deux brides (18, 20) comportent des surfaces d'appui complémentaires (50) adaptées pour coopérer et limiter le rapprochement des extrémités de la virole (12).

4. Manchon (10) selon l'une quelconque des revendications précédentes, **caractérisé en ce qu'**il comporte une cale amovible (80) interposée entre les deux brides (18, 20), laquelle cale (80) définit un intervalle déterminé entre les extrémités de la virole (12) adapté pour la mise en place du manchon (10) sur le ou chaque élément de tuyauterie (2, 4).

5. Manchon (10) selon les revendications 2 et 4 prises ensembles, **caractérisé en ce que** la cale (80) comporte un profil d'entraînement (84) adapté pour coopérer avec le profil ménagé sur le ou chaque boulon (24) et constitue ainsi un outil de serrage du ou de chaque boulon (24).

6. Manchon (10) selon l'une quelconque des revendications précédentes, **caractérisé en ce que** les deux brides (18, 20) comportent suivant leur épaisseur des échancrures (52) en regard, délimitant une lucarne (53) d'accès à la garniture (14).

7. Manchon (10) selon l'une quelconque des revendications précédentes, **caractérisé en ce que** la virole (12) comporte une bande métallique tubulaire, ouverte suivant une génératrice, laquelle bande comporte, à ses extrémités en regard, des lumières (34) pour la fixation des brides (18, 20) et **en ce que** les brides (18, 20) comportent des pattes (48) engagées dans lesdites lumières (34), lesquelles pattes (48) assurent la solidarisation des brides (18, 20) aux extrémités de la virole (12).

8. Manchon (10) selon la revendication 7, **caractérisé en ce que** la garniture tubulaire (14) comporte, ménagés dans sa surface extérieure sur laquelle s'appuie la virole (12), des évidements (68, 110) de réception des pattes (48) de liaison des brides aux extrémités de la virole (12).

9. Manchon (10) selon l'une quelconque des revendications précédentes, **caractérisé en ce que** la virole ouverte (12) comporte à ses extrémités des échancrures (36) en regard, délimitant une lucarne (38) de visualisation de la garniture (14).

10. Manchon (10) selon l'une quelconque des revendications précédentes, **caractérisé en ce que** chaque bride (18, 20) comporte latéralement deux piliers (40) solidaires de la virole (12) et un pontet (44) écarté de la virole (12) reliant les deux piliers (40), chaque bride (18, 20) définissant une poignée de préhension du manchon (10).

11. Manchon (10) selon l'une quelconque des revendications précédentes, **caractérisé en ce que** les deux brides (130, 132) comportent suivant leurs faces en regard des profils complémentaires chevauchant les extrémités (32) de la virole (12) et facilitant l'accostage des deux brides (130, 132).

12. Manchon (10) selon l'une quelconque des revendications précédentes, **caractérisé en ce que** la garniture tubulaire (14) comporte, extérieurement de part et d'autre, des collets annulaires (60) délimitant entre eux un siège (62) annulaire de réception de la virole (12).

13. Manchon (10) selon l'une quelconque des revendications précédentes, **caractérisé en ce que** la garniture (14) comporte sur sa face interne un ensemble de bourrelets annulaires d'étanchéité (76, 108) adaptés pour venir s'appliquer suivant leur ligne de crête sur le ou chaque élément de tuyauterie (2, 4).

14. Manchon (10) selon l'une quelconque des revendications précédentes, **caractérisé en ce que** la garniture tubulaire (14) comporte sur sa face interne une saillie (74) de positionnement formant butée adaptée pour coopérer avec le ou chaque élément de tuyauterie (2, 4).

15. Manchon (10) selon l'une quelconque des revendications précédentes, **caractérisé en ce que** la garniture (14) est généralement réalisée dans un matériau opaque et comporte, dans sa zone médiane, au moins une lucarne (100) réalisée dans un matériau transparent assurant un accès visuel au ou à chaque élément de tuyauterie (2, 4).

## Patentansprüche

1. Muffe (10) für ein Rohrleitungselement für die stumpfe Verbindung von Rohrleitungselementen (2, 4), die eine Rohrdichtung (14) aus Elastomermaterial aufweist, sowie eine äußere Hülle mit einem längsgeschlitzen Ring (12), der mindestens teilweise die Dichtung (14) und die Klemmeinrichtungen (16) für die Hülle umhüllt, um die Seitenenden des Rings (12) einander anzunähern und um die Dichtung (14) zu komprimieren, wobei die Klemmeinrichtungen (16) zwei angesetzte Flansche (18, 20; 130, 132), die jeweils fest mit einem Seitenende des Rings (12) verbunden sind, und Zugeinrichtungen (22) der beiden Flansche (18, 20; 130, 132) zueinander aufweisen.

2. Muffe (10) nach Anspruch 1, **dadurch gekennzeichnet, dass** die beiden Flansche (16, 18) mindestens ein Paar koaxialer Bohrungen (56) aufweisen und dass die Zugeinrichtungen (22) mindestens einen Bolzen (24) aufweisen, der in das oder jedes Bohrungspaar (56) eingeführt ist.

3. Muffe (10) nach Anspruch 1 oder 2, **dadurch gekennzeichnet, dass** die beiden Flansche (18, 20) komplementäre Stützflächen (50) aufweisen, die angepasst sind, um zusammenzuwirken und die Annäherung der Enden des Rings (12) zu begrenzen.

4. Muffe (10) nach einem der vorstehenden Ansprüche, **dadurch gekennzeichnet, dass** sie einen lösbaren Keil (80) aufweist, der zwischen beiden Flanschen eingefügt ist, wobei dieser Keil (80) einen bestimmten Zwischenraum zwischen den Enden des Rings (12) festlegt, der für das Einsetzen der Muffe (10) auf dem oder jedem Rohrleitungselement (2, 4) angepasst ist.

5. Muffe (10) nach den Ansprüchen 2 und 4 zusammen, **dadurch gekennzeichnet, dass** der Keil (80) ein Antriebsprofil (84) aufweist, das angepasst ist, um mit dem auf dem oder jedem Bolzen (24) ausgebildeten Profil zusammenzuwirken und somit ein Spannwerkzeug für den oder jeden Bolzen (24) bildet.

6. Muffe (10) nach einem der vorstehenden Ansprüche, **dadurch gekennzeichnet, dass** die beiden Flansche (18, 20) gemäß ihrer Dicke gegenüberliegende Aussparungen (52) aufweisen, die ein Zugangsfenster (53) zur Dichtung (14) begrenzen.

7. Muffe (10) nach einem der vorstehenden Ansprüche, **dadurch gekennzeichnet, dass** der Ring (12) ein metallisches, rohrförmiges Band aufweist, das entlang einer Mantellinie geöffnet ist, wobei das Band an seinen gegenüberliegenden Enden Langlöcher (34) zur Befestigung der Flansche (18, 20) aufweist, und dadurch, dass die Flansche (18, 20) Laschen (48) aufweisen, die in die Langlöcher (34) eingeführt sind, wobei diese Laschen (48) die feste Verbindung der Flansche'(18, 20) mit den Enden des Rings (12) gewährleisten.

8. Muffe (10) nach Anspruch 7, **dadurch gekennzeichnet, dass** die Rohrdichtung (14) in ihrer Außenfläche, auf welche sich der Ring (12) stützt, Aussparungen (68, 110) zur Aufnahme von Verbindungslaschen (48) der Flansche an den Enden des Rings (12) aufweist.

9. Muffe (10) nach einem der vorstehenden Ansprüche, **dadurch gekennzeichnet, dass** der offene Ring (12) an seinen Enden gegenüberliegende Aussparungen (36) aufweist, die ein Sichtfenster (38) der Dichtung (14) begrenzen.

10. Muffe (10) nach einem der vorstehenden Ansprüche, **dadurch gekennzeichnet, dass** jeder Flansch (18, 20) seitlich zwei fest mit dem Ring (12) verbundene Stützen (40) und eine zum Ring (12) einen Abstand aufweisende Brücke aufweist, die die beiden Stützen (40) verbindet, wobei jeder Flansch (18, 20) einen Griff zum Greifen der Muffe (10) festlegt.

11. Muffe (10) nach einem der vorstehenden Ansprüche, **dadurch gekennzeichnet, dass** die beiden Flansche (130, 132) entlang ihren gegenüberliegenden Flächen komplementäre Profile aufweisen, die die Enden (32) des Rings (12) überlappen und die Kopplung der beiden Flansche (130, 132) erleichtern.

12. Muffe (10) nach einem der vorstehenden Ansprüche, **dadurch gekennzeichnet, dass** die Rohrdichtung (14) außen zu beiden Seiten Ringkragen (60) aufweist, die zwischen sich einen Ringsitz (62) zur Aufnahme des Rings (12) begrenzen.

13. Muffe (10) nach einem der vorstehenden Ansprüche, **dadurch gekennzeichnet, dass** die Dichtung (14) auf ihrer Innenfläche eine Einheit von Dichtungs-Ringwulsten (76, 108) aufweist, die angepasst sind, um entlang ihrer Scheitellinie auf dem oder jedem Rohrleitungselement (2, 4) aufzuliegen.

14. Muffe (10) nach einem der vorstehenden Ansprüche, **dadurch gekennzeichnet, dass** die Rohrdichtung (14) auf ihrer Innenfläche einen einen Anschlag bildenden Positionierungsvorsprung (74) aufweist, der angepasst ist, um mit dem oder jedem Rohrleitungselement (2, 4) zusammenzuwirken.

15. Muffe (10) nach einem der vorstehenden Ansprüche, **dadurch gekennzeichnet, dass** die Dichtung (14) allgemein aus einem undurchsichtigen Material besteht und in ihrem mittleren Bereich wenigstens ein Fenster (100) aus einem transparenten Material aufweist, das einen visuellen Zugang zu dem oder jedem Rohrleitungselement (2, 4) gewährt.

## Claims

1. A sleeve (10) for a pipe element intended for the end-to-end assembly of pipe elements (2, 4), of the type having a tubular sealing gasket (14) of elastomer material, an external casing having a collar (12) that is split longitudinally and encases the gasket (14) at least partially, and means (16) of clamping the casing to bring the lateral ends of the collar (12) closer together and compress the sealing gasket (14), in which the clamping means (16) have two attached flanges (18, 20; 130, 132) which are each integrally joined to a lateral end of the collar (12), and means (22) for pulling the two flanges (18, 20; 130, 132) towards one another.

2. A sleeve (10) according to Claim 1, **characterised in that** the two flanges (16, 18) have at least one pair of coaxial bores (56), and **in that** the pulling means (22) have at least one bolt (24) engaging in the or each pair of bores (56).

3. A sleeve (10) according to Claim 1 or 2, **characterised in that** the two flanges (18, 20) have complementary support surfaces (50) which are suitable for cooperating and limiting the amount by which the ends of the collar (12) can approach one another.

4. A sleeve (10) according to any one of the preceding claims, **characterised in that** it has a removable wedge (80) placed between the two flanges (18, 20), this wedge (80) defining a gap made between the ends of the collar (12) and suitable for positioning the sleeve (10) on the or each pipe element (2, 4).

5. A sleeve (10) according to Claims 2 and 4 taken together, **characterised in that** the wedge (80) has an actuating profile (84) suitable for cooperating with the profile made on the or each bolt (24) and thus forms a clamping tool for the or each bolt (24).

6. A sleeve (10) according to any one of the preceding claims, **characterised in that** the two flanges (18, 20) have opposing scooped edges (52) in their thickness, delimiting an access port (53) to the gasket (14).

7. A sleeve (10) according to any one of the preceding claims, **characterised in that** the collar (12) has a tubular metal band which is open along one generatrice and which has, at its opposing ends, apertures (34) for fixing the flanges (18, 20), and **in that** the flanges (18, 20) have tabs (48) engaging in the said apertures (34), these tabs (48) ensuring that the flanges (18, 20) are integrally joined to the ends of the collar (12).

8. A sleeve (10) according to Claim 7, **characterised in that** the tubular gasket (14) has, made in its outer surface against which the collar (12) bears, recesses (68, 110) for receiving the tabs (48) for connecting the flanges to the ends of the collar (12).

9. A sleeve (10) according to any one of the preceding claims, **characterised in that** the open collar (12) has at its ends opposing scooped edges (36) delimiting a port (38) for viewing the gasket (14).

10. A sleeve (10) according to any one of the preceding claims, **characterised in that** each flange (18, 20) has laterally two blocks (40) integrally joined to the collar (12) and a bridging element (44) separated from the collar (12) and connecting the two blocks (40), each flange (18, 20) defining a gripping handle of the sleeve (10).

11. A sleeve (10) according to any one of the preceding claims, **characterised in that** the two flanges (130, 132) have, on their opposing faces, complementary profiles which overlap the ends (32) of the collar (12) and facilitate bringing the two flanges (130, 132) alongside one another.

12. A sleeve (10) according to any one of the preceding claims, **characterised in that** the tubular gasket (14) has, on the outside on either side, annular flared flanges (20) delimiting between them an annular seating (62) for receiving the collar (12).

13. A sleeve (10) according to any one of the preceding claims, **characterised in that** the gasket (14) has on its interior face a set of annular sealing strips (76, 108) suitable for application along the line of their arête to the or each pipe element (2, 4).

14. A sleeve (10) according to any one of the preceding claims, **characterised in that** the tubular gasket (14) has on its interior face a jutting portion (74) for positioning, which forms a stop suitable for cooperating with the or each pipe element (2, 4).

15. A sleeve (10) according to any one of the preceding claims, **characterised in that** the gasket (14) is generally made of an opaque material and has, in its central zone, at least one port (100) made of a transparent material ensuring visual access to the or each pipe element (2, 4).
